# FASCICULE DE BREVET EUROPEEN

(11) **EP 2 340 958 B1**
(45) Date de publication et mention de la délivrance du brevet: **07.06.2017**
(21) Numéro de dépôt: 10306537.1
(22) Date de dépôt: 29.12.2010
(51) Int. Cl.: B60L 3/00

(54) **Equipement électrique disposé en toiture d'un véhicule ferroviaire à traction électrique**
Elektrische Ausstattung auf dem Dach eines Schienenfahrzeugs mit elektrischem Antrieb
Electrical equipment arranged in the roof of an electrically powered railway vehicle

(30) Priorité: 30.12.2009 FR 0959666
(43) Date de publication de la demande: 06.07.2011
(73) Titulaire: ALSTOM Transport Technologies, 93400 Saint-Ouen (FR); Speedlnnov, 75008 Paris (FR)
(72) Inventeur: Quentin, Nicolas, 65420, Ibos (FR); Lempegnat, Cédric, 64000, Pau (FR); Plasson, Claude, 17138, Puilboreau (FR)
(74) Mandataire: Lavoix

(56) Documents cités:
- EP-A1- 0 596 790
- DE-A1-102005 008 212
- US-A- 2 262 413

## Description

La présente invention concerne un équipement électrique disposé en toiture d'un véhicule ferroviaire à traction électrique, du type comprenant au moins une source d'alimentation en courant alternatif, ladite source étant reliée à au moins une ligne d'alimentation en courant alternatif , reliée d'autre part à au moins un équipement haute tension destiné à être alimenté en courant alternatif, un disjoncteur alternatif étant prévu sur la ligne d'alimentation de sorte à isoler l'équipement haute tension de la source d'alimentation lorsque ledit disjoncteur est ouvert, l'équipement électrique comprenant un sectionneur de mise à la masse mobile entre une position ouverte dans laquelle le sectionneur n'est pas connecté à la ligne d'alimentation et une position fermée, dans laquelle le sectionneur est connecté à la ligne d'alimentation en un point amont disposé entre la sortie de la source d'alimentation et l'entrée du disjoncteur et en un point aval disposé entre la sortie du disjoncteur et l'équipement haute tension. Un tel équipement électrique selon le préambule de la revendication 1 est décrit dans EP 0 596 790. L'invention concerne également un véhicule ferroviaire à traction électrique comprenant un tel équipement électrique.

Les véhicules ferroviaires actuels doivent être capable de collecter de l'électricité de différents types de ligne d'alimentation ou caténaire pour s'adapter au territoire sur lequel ces véhicules circulent. Ainsi, certaines caténaires distribuent de l'électricité en courant continu, tandis que d'autres fournissent de l'électricité en courant alternatif.

Afin de collecter ces deux types de courant, il est connu de prévoir des véhicules ferroviaires comprenant au moins un pantographe rétractable de collecte du courant continu et au moins un pantographe rétractable de collecte du courant alternatif. En fonction de l'endroit où circule le véhicule ferroviaire, l'un ou l'autre pantographe est appliqué contre la caténaire de façon adaptée. Dans certains cas un seul pantographe peut remplir les deux fonctions.

L'invention concerne plus particulièrement la ligne d'alimentation en courant alternatif ou ligne de toiture monophasée. Ainsi, dans le cas de la circulation d'un train sous caténaire monophasée, un pantographe permet de réaliser la collecte du courant alternatif sur le train. Ce courant est par exemple transmis à un transformateur.

Il est connu de prévoir un disjoncteur alternatif sur la ligne d'alimentation en courant alternatif entre la sortie des pantographes d'une part et la ligne de toiture monophasée et/ou le transformateur d'autre part. Le disjoncteur agit comme un interrupteur ouvrant la ligne d'alimentation en courant alternatif.

Il est également connu de prévoir un sectionneur de mise à la masse permettant de mettre l'ensemble des lignes d'alimentation du véhicule ferroviaire à la masse afin de permettre des opérations de maintenance sans risque d'électrocution pour les personnes chargées de la maintenance. Un tel sectionneur est prévu en parallèle du disjoncteur alternatif afin de mettre le circuit en amont et le circuit en aval du disjoncteur à la masse.

Depuis plus d'une dizaine d'année, le disjoncteur alternatif intègre généralement une ampoule à vide, dont les propriétés de coupure ou de fermeture sont reconnues.

Cependant, en cas de défaillance du disjoncteur, il est possible que celui-ci ne remplisse pas son rôle d'interrupteur et laisse passer le courant même si il a été commandé pour se trouver en position ouverte. C'est par exemple le cas, si l'ampoule à vide est endommagée et que celle-ci subit une perte de vide. Le disjoncteur laisse alors passer le courant en permanence, ce qui présente de multiples risques.

L'un des buts de l'invention est de pallier une éventuelle défaillance du disjoncteur alternatif en proposant un équipement électrique équipé d'un dispositif de sectionnement apte à remplir le rôle du disjoncteur alternatif tout en offrant un agencement compact et peu complexe.

A cet effet, l'invention concerne un équipement électrique du type précité, dans lequel l'équipement électrique comprend en outre un dispositif de sectionnement, disposé sur la ligne d'alimentation, ledit dispositif de sectionnement étant mobile entre une position fermée dans laquelle le courant peut circuler sur la ligne d'alimentation et une position ouverte dans laquelle la connexion entre la source d'alimentation et le disjoncteur ou entre le disjoncteur et l'équipement haute tension est interrompue.

L'équipement électrique selon l'invention permet d'intégrer, sur un même ensemble compact, les fonctions de disjoncteur alternatif et de mise à la masse et de sectionnement, tout en garantissant un bon fonctionnement de l'équipement électrique.

Selon d'autres caractéristiques de l'invention :
- le dispositif de sectionnement est prévu entre le point amont et l'entrée du disjoncteur ou entre la sortie du disjoncteur et le point aval ;
- la ligne d'alimentation en courant alternatif est formée en deux parties, la première partie comprenant la partie de la ligne d'alimentation s'étendant en amont du dispositif de sectionnement et la deuxième partie comprenant la partie de la ligne d'alimentation s'étendant en aval du dispositif de sectionnement, la première et la deuxième parties étant physiquement séparées et pouvant être connectées entre elles par le positionnement du dispositif de sectionnement en position fermée ;
- le dispositif de sectionnement comprend une barre, réalisée en un matériau conducteur, ladite barre étant mobile en rotation entre la position fermée dans laquelle elle relie la deuxième partie de la ligne d'alimentation à la première partie de la ligne d'alimentation et la position ouverte dans laquelle elle est écartée de la première ou de la deuxième parties de la ligne d'alimentation ;

- la barre est montée en rotation sur un actionneur prévu en entrée de la deuxième partie de la ligne d'alimentation ;
- l'actionneur de la barre transmet l'effort de rotation à la barre au travers d'un isolateur ;
- le sectionneur de mise à la masse comprend deux bras reliés à la masse, lesdits bras étant mobiles entre la position ouverte dans laquelle lesdits bras sont écartés de la ligne d'alimentation et la position fermée dans laquelle l'un des bras est relié à la première partie de la ligne d'alimentation et l'autre bras est relié à la deuxième partie de la ligne d'alimentation ;
- le sectionneur de mise à la masse comprend un bras d'actionnement manuel muni d'une poignée apte à faire pivoter les deux bras entre la position ouverte et la position fermée ;
- le disjoncteur est un disjoncteur à vide, comprenant une ampoule à vide ; et
- le disjoncteur, le sectionneur de mise à la masse et le dispositif de sectionnement sont fixés sur une plaque de support destinée à être disposée en toiture d'un véhicule ferroviaire à traction électrique.

D'autres aspects et avantages de l'invention apparaîtront à la lecture de la description qui suit, donnée à titre d'exemple et faite en référence aux dessins annexés, dans lesquels :
- la Fig. 1 est une représentation schématique d'un circuit d'alimentation comprenant l'équipement électrique selon l'invention,
- la Fig. 2 est une représentation schématique en perspective de l'équipement électrique selon l'invention.

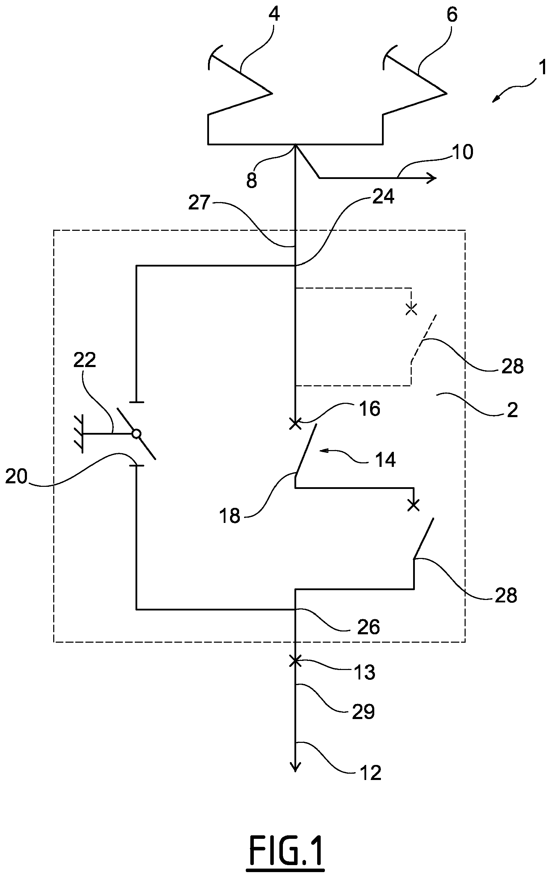

En référence à la Fig. 1, on décrit un circuit d'alimentation 1 en électricité d'un véhicule ferroviaire à traction électrique comprenant un équipement électrique 2 formé d'un seul ensemble et destiné à être disposé en partie en toiture du véhicule ferroviaire. Cet équipement est représenté dans le cadre en pointillés de la Fig. 1.

Le circuit d'alimentation 1 comprend au moins une source d'alimentation en courant alternatif 6, formée par un pantographe rétractable adapté pour être appliqué contre une caténaire à courant alternatif. Selon un mode de réalisation, le circuit d'alimentation 1 peut également comprendre une source d'alimentation en courant continue 4, formée par un autre pantographe. La commande des pantographes en fonction du courant fourni par la caténaire est connue en soi et ne sera pas décrite en détail ici. Les sources de courant continu 4 et alternatif 6 sont par exemple connectées entre elles en un point 8 du circuit.

La source de courant alternatif 6 alimente le circuit d'alimentation 1 en courant alternatif à partir de son point de sortie 8. Le circuit 1 comprend par exemple une ligne d'alimentation 10 et une ligne d'alimentation en courant alternatif 12 reliées au point 8. D'autres lignes d'alimentation peuvent être prévues en fonction des besoins des équipements du véhicule ferroviaire.

La ligne d'alimentation 10 est par exemple reliée, à d'autres équipements de traction (non représentés). Cette ligne d'alimentation 10 peut, dans certains cas, correspondre à la distribution du courant continu, par exemple à une tension de 1500 V.

La ligne d'alimentation 12, ou ligne Haute Tension Monophasée, est reliée, à l'opposé du point 8, à un équipement haute tension destiné à être alimenté en courant alternatif, tel qu'un transformateur (non représenté) chargé de distribuer le courant à différents équipements. La ligne d'alimentation en courant alternatif fonctionne par exemple sous une tension 25 kV alternatif.

Afin de commander le passage du courant dans la ligne d'alimentation en courant alternatif 12 en fonction des besoins en alimentation, il est connu de placer un disjoncteur alternatif 14 sur cette ligne entre le point 8 et un point d'alimentation aval 13 de la ligne d'alimentation 12. Un tel disjoncteur alternatif 14 est par exemple un disjoncteur monophasé à vide, fonctionnant avec une ampoule à vide, comme cela sera décrit ultérieurement. Le disjoncteur 14 comprend une entrée 16, reliée au point 8, et une sortie 18, reliée au point d'alimentation aval 13 de la ligne d'alimentation 12. Le disjoncteur 14 agit comme un interrupteur ouvert, lorsqu'on ne souhaite pas alimenter la partie de circuit en aval du disjoncteur alternatif 14, et fermé lorsque l'on souhaite alimenter la partie de circuit en aval du disjoncteur 14 afin de permettre le passage du courant jusqu'à une ligne de toiture monophasée et au transformateur.

Egalement de façon connue, un sectionneur de mise à la masse 20 est prévu en parallèle du disjoncteur 14 afin de permettre la mise à la masse de l'ensemble du circuit d'alimentation 1 pour des opérations de maintenance par exemple. Le sectionneur 20, dont la structure sera décrite ultérieurement, est relié à un circuit de terre 22 et est mobile entre une position ouverte et une position fermée. En position ouverte, le sectionneur 20 agit comme un interrupteur ouvert et n'est pas connecté aux points d'alimentation 8 et 13. En position fermée, le sectionneur 20 agit comme un interrupteur fermé et relie le circuit de terre 22 aux points d'alimentation 8 et 13 afin de placer le circuit d'alimentation 1 à la terre, ce qui permet d'effectuer les opérations de maintenance en sécurité. En position fermée, le sectionneur 20 est relié à la ligne d'alimentation 12 en un point amont 24, disposé entre la sortie de la source d'alimentation 6, c'est-à-dire le point 8, et l'entrée 16 du disjoncteur 14, et en un point aval 26, disposé entre la sortie 18 du disjoncteur alternatif 14 et le transformateur.

L'équipement électrique 2 comprend en outre un dispositif de sectionnement 28 permettant de pallier une éventuelle défaillance du disjoncteur alternatif 14. Ce dispositif de sectionnement 28, dont la structure sera décrite ultérieurement, est disposé sur la ligne d'alimentation 12, entre la sortie 18 du disjoncteur 14 et le point aval 26 (en traits pleins sur la Fig. 1) ou entre le point amont 24 et l'entrée 16 du disjoncteur 14 (en traits pointillés sur la Fig. 1). Ce dispositif de sectionnement 28 agit comme un interrupteur supplémentaire en série avec le disjoncteur 14 et est mobile entre une position fermée, dans laquelle le courant peut circuler sur la ligne d'alimentation 12, et une position ouverte, dans laquelle la connexion entre les sources d'alimentation 4 et 6 et le disjoncteur 14 - lorsque le dispositif de sectionnement 28 est disposé entre le point amont 24 et l'entrée 16 du disjoncteur - ou entre le disjoncteur 14 et la ligne de toiture monophasée et le transformateur - lorsque le dispositif de sectionnement 28 est disposé entre la sortie 18 du disjoncteur et le point aval 26 - est interrompue. Ainsi, en cas de dysfonctionnement du disjoncteur 14 rendant celui-ci passant même lorsqu'il est en position ouverte, le dispositif de sectionnement 28 est placé en position ouverte ce qui bloque la circulation du courant sur la ligne d'alimentation 12. De la sorte, même si le disjoncteur alternatif est défectueux, on empêche tout de même le courant d'atteindre le transformateur.

Le positionnement du dispositif de sectionnement 28 entre le point amont 24 et l'entrée 16 du disjoncteur 14 ou entre la sortie 18 du disjoncteur 14 et le point aval 26 permet d'assurer toute la potentialité fonctionnelle du sectionneur de mise à la masse 20. En effet, si le dispositif de sectionnement 28 était placé entre le point 8 et le point amont 24 et en position ouverte, le positionnement du sectionneur 20 en position fermée permettrait de placer la ligne d'alimentation 12 à la masse mais pas la ligne d'alimentation 10 ou les sources de courant 4 et 6. De même, si le dispositif de sectionnement 28 était placé au-delà du point aval 26, c'est-à-dire entre ce point 26 et la ligne de toiture monophasée et le transformateur, et en position ouverte, le positionnement de sectionneur 20 en position fermée permettrait de placer la ligne d'alimentation 10 et les sources de courant 4 et 6 à la masse, mais pas la partie de la ligne d'alimentation 12 s'étendant au-delà du point aval 26 et la ligne de toiture monophasée et le transformateur. Les opérations de maintenance ne pourraient alors pas être effectuées en toute sécurité pour les personnes chargées de la maintenance.

On considérera par la suite que la ligne d'alimentation 12 est formée en deux parties 27 et 29, la première partie 27 étant formée par la partie de la ligne d'alimentation 12 s'étendant en amont du dispositif de sectionnement 28 et la deuxième partie 29 étant formée par la partie de la ligne d'alimentation 12 s'étendant en aval de ce dispositif de sectionnement 28. Les termes « amont » et « aval » sont définis par rapport au trajet allant des sources de courant 4 et 6 au transformateur.

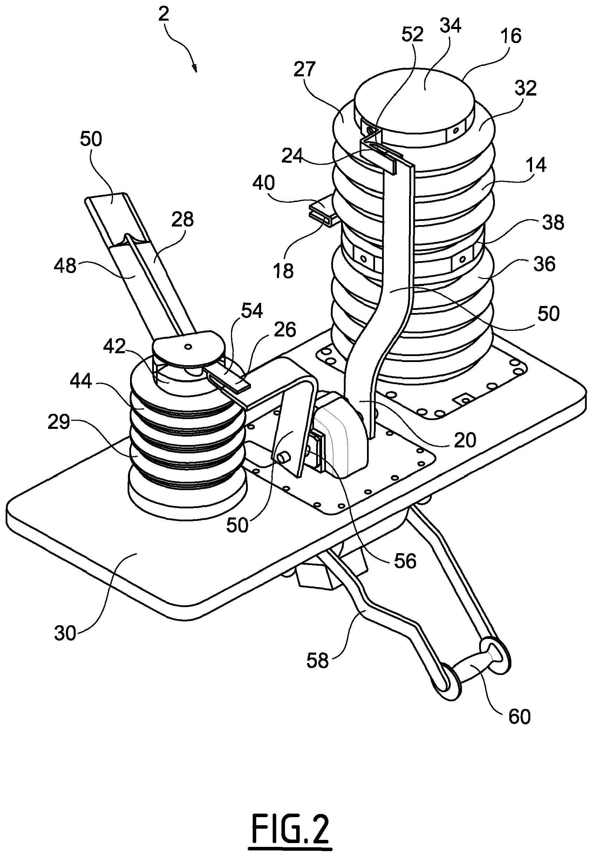

En référence à la Fig. 2, on décrit à présent la structure mécanique de l'équipement électrique 2.

L'ensemble formé par le disjoncteur alternatif 14, le sectionneur de mise à la masse 20 et le dispositif de sectionnement 28 est disposé sur une plaque de support 30 destinée à être placée en toiture du véhicule ferroviaire. Cet ensemble est donc fixé sur un unique support mécanique particulièrement compact et simple à installer sur le véhicule ferroviaire. La plaque de support 30 est par exemple réalisée en aluminium et les équipements fixés sur cette plaque 30 et connectés électriquement à celle-ci sont automatiquement reliés à la terre au travers de la fixation de la plaque de support 30 au véhicule ferroviaire.

Le disjoncteur 14 est un disjoncteur alternatif monophasé comprenant une ampoule à vide (non représentée) disposée dans une partie supérieure 32 du disjoncteur 14. L'ampoule à vide permet de connecter et de déconnecter la sortie 18 du disjoncteur 14 et la sortie des sources de courant 4 et 6. La sortie des sources de courant 4 et 6 est reliée un contact 34, formée par une plaque conductrice surmontant la partie supérieure 32. Une partie inférieure 36 du disjoncteur 14 forme un isolateur creux et comprend en son intérieur la tige de commande de l'ampoule à vide permettant de commander la connexion et la déconnexion du contact 34 et de la sortie 18 du disjoncteur 14. La sortie 18 du disjoncteur 14 est formée par une bride 38 séparant la partie supérieure 32 et la partie inférieure 36 et comprenant une pince de connexion 40. La partie inférieure 36 du disjoncteur 14 permet d'isoler la partie supérieure 32, raccordée à la haute tension, des équipements disposés sur ou en dessous de la plaque de support 30 et autour de la partie inférieure 36 du disjoncteur 14. La structure et le fonctionnement d'un tel disjoncteur 14 sont connus et ne seront pas décrits plus en détail ici.

La partie de disjoncteur 14 allant du contact 34 à la pince de connexion 40 forme la première partie 27 de la ligne d'alimentation 12. La pince de connexion 40 forme la sortie de cette première partie 27 de la ligne d'alimentation en courant alternatif.

La deuxième partie 29 de la ligne d'alimentation 12 est physiquement séparée de la première partie 27 et peut être reliée à cette première partie par l'intermédiaire du dispositif de sectionnement 28 lorsque celui-ci est positionné en position fermée.

L'entrée 42 de la deuxième partie 29 de la ligne d'alimentation en courant alternatif 12 est formée par un contact disposé sur un isolateur 44 fixé sur la plaque de support 30 et écarté du disjoncteur 14, par exemple d'une distance de l'ordre de 30 cm. Cette entrée 42 est connectée électriquement à une barre 48, réalisée en matériau conducteur, prévue à la partie extrême supérieure de l'isolateur 44. L'isolateur 44 comprend également en son intérieur un arbre mobile en rotation fixé à la barre 48 et relié à un actionneur situé sous la plaque de base et permettant de déplacer celle-ci en rotation autour de l'axe de l'isolateur 44. Selon un autre mode de réalisation, l'isolateur 44 est lui-même mobile en rotation et c'est cet isolateur 44 qui assure la transmission du mouvement de rotation à la barre 48. La barre 48 forme le dispositif de sectionnement 28 et est donc mobile en rotation entre une position ouverte, dans laquelle elle est écartée du disjoncteur 14, et une position fermée dans laquelle sa partie extrême libre 50 est insérée dans la pince de connexion 40 de sorte à connecter la première et la deuxième parties 27 et 29 de la ligne d'alimentation en courant alternatif 12.

Ainsi, en cas de défaillance du disjoncteur 14, par exemple si l'ampoule subit une perte de vide ce qui rend le disjoncteur 14 passant même en position ouverte, le dispositif de sectionnement 28 permet de séparer la sortie de la première partie 27 de la ligne d'alimentation en courant alternatif 12 de l'entrée 42 de la deuxième partie 29 de la ligne d'alimentation en courant alternatif 12 en déplaçant la barre 48 vers sa position ouverte. Sur la Fig. 2, la barre 48 a été représentée en position ouverte.

L'isolateur 44 permet d'isoler la barre 48 et l'entrée 42, reliées à la haute tension en position fermée de la barre, des équipements sur ou sous la plaque de support 30 et disposés autour de l'isolateur 44.

Le sectionneur de mise à la masse 20 se distingue des sectionneurs usuels en ce qu'il comprend deux bras de sectionnement 50, montés en rotation sur la plaque de support 30 de sorte à les relier à la masse, alors qu'un sectionneur usuel n'en comprend qu'un. En effet, le sectionneur de mise à la masse 20 de l'invention doit placer à la masse à la fois la première partie 27 et la deuxième partie 29 de la ligne d'alimentation en courant alternatif 12 qui sont physiquement séparées. Ainsi, le sectionneur de mise à la masse 20 comprend deux bras de sectionnement 50 mobiles en rotation entre une position ouverte dans laquelle ils sont écartés du disjoncteur 14 et de l'isolateur 44 et une position fermée, dans laquelle l'un des bras 50 est inséré dans une pince de connexion 52, formant le point amont 24 et connectée électriquement au contact 34, et l'autre bras 50 est inséré dans une pince de connexion 54, formant le point aval 26 et connectée électriquement à l'entrée 42 de la deuxième partie 29 de la ligne d'alimentation en courant alternatif 12, comme représenté sur la Fig. 2.

Les bras 50 sont montés en rotation, à l'une de leur partie extrême, sur un axe 56 commun au deux bras 50 et connectant électriquement ceux-ci au circuit de terre 22. Selon le mode de réalisation représenté sur la Fig. 2, l'actionnement en rotation du sectionneur de mise à la masse 20 se fait de façon manuelle par un bras d'actionnement 58 muni d'une poignée 60 et s'étendant sous la plaque de support 30. L'actionnement du bras d'actionnement 58 entraîne le pivotement des bras de sectionnement 50 entre leur position ouverte et fermée. Alternativement, le sectionneur de mise à la masse 20 pourrait être actionné par des moyens électriques ou des moyens pneumatiques de façon connue.

On notera que sur la Fig. 2, le positionnement de la barre 48 et du sectionneur de mise à la masse 20 correspond au cas où le dispositif de sectionnement 28 est disposé entre la sortie 18 du disjoncteur 14 et le point aval 26.

L'équipement électrique décrit ci-dessus permet de réaliser de façon simple et compacte sur un même support mécanique 30 la fonction de sectionnement du transformateur par l'intermédiaire du disjoncteur 14, la fonction de sectionnement contre la perte de vide ou une défaillance du disjoncteur 14 par l'intermédiaire du dispositif de sectionnement 28 et la fonction de mise à la masse pour les opérations de maintenance par l'intermédiaire du sectionneur de mise à la masse 20.

## Revendications

1. Equipement électrique (2) disposé en toiture d'un véhicule ferroviaire à traction électrique, comprenant au moins une source d'alimentation en courant alternatif (6), ladite source (6) étant reliée à au moins une ligne d'alimentation en courant alternatif (12), reliée d'autre part à au moins un équipement haute tension destiné à être alimenté en courant alternatif, un disjoncteur alternatif (14) étant prévu sur la ligne d'alimentation (12) de sorte à isoler l'équipement haute tension de la source d'alimentation (6) lorsque ledit disjoncteur (14) est ouvert, l'équipement électrique (2) comprenant un sectionneur de mise à la masse (20) mobile entre une position ouverte dans laquelle le sectionneur (20) n'est pas connecté à la ligne d'alimentation (12) et une position fermée, dans laquelle le sectionneur (20) est connecté à la ligne d'alimentation (12) en un point amont (24) disposé entre la sortie (8) de la source d'alimentation (6) et l'entrée (16) du disjoncteur (14) et en un point aval (26) disposé entre la sortie (18) du disjoncteur (14) et l'équipement haute tension, l'équipement électrique (2) comprenant en outre un dispositif de sectionnement (28), disposé sur la ligne d'alimentation (12), ledit dispositif de sectionnement (28) étant mobile entre une position fermée dans laquelle le courant peut circuler sur la ligne d'alimentation (12) et une position ouverte dans laquelle la connexion entre la source d'alimentation (6) et le disjoncteur (14) ou entre le disjoncteur (14) et l'équipement haute tension est interrompue, **caractérisé en ce que** le dispositif de sectionnement (28) est prévu entre le point amont (24) et l'entrée (16) du disjoncteur (14) ou entre la sortie (18) du disjoncteur (14) et le point aval (26).

2. Equipement électrique selon la revendication 1, **caractérisé en ce que** la ligne d'alimentation en courant alternatif (12) est formée en deux parties (27, 29), la première partie (27) comprenant la partie de la ligne d'alimentation (12) s'étendant en amont du dispositif de sectionnement (28) et la deuxième partie (29) comprenant la partie de la ligne d'alimentation (12) s'étendant en aval du dispositif de sectionnement (28), la première (27) et la deuxième (29) parties étant physiquement séparées et pouvant être connectées entre elles par le positionnement du dispositif de sectionnement (28) en position fermée.

3. Equipement électrique selon la revendication 2, **caractérisé en ce que** le dispositif de sectionnement (28) comprend une barre (48), réalisée en un matériau conducteur, ladite barre (48) étant mobile en rotation entre la position fermée dans laquelle elle relie la deuxième partie (29) de la ligne d'alimentation (12) à la première partie (27) de la ligne d'alimentation (12) et la position ouverte dans laquelle elle est écartée de la première (27) ou de la deuxième (29) parties de la ligne d'alimentation (12).

4. Equipement électrique selon la revendication 3, **caractérisé en ce que** la barre (48) est montée en rotation sur un actionneur prévu en entrée (42) de la deuxième partie (29) de la ligne d'alimentation (12).

5. Equipement électrique selon la revendication 4, **caractérisé en ce que** l'actionneur de la barre (48) transmet l'effort de rotation à la barre (48) au travers d'un isolateur (44).

6. Equipement électrique selon l'une quelconque des revendications 2 à 5, **caractérisé en ce que** le sectionneur de mise à la masse (20) comprend deux bras (50) reliés à la masse, lesdits bras (50) étant mobiles entre la position ouverte dans laquelle lesdits bras (50) sont écartés de la ligne d'alimentation (12) et la position fermée dans laquelle l'un des bras (50) est relié à la première partie (27) de la ligne d'alimentation (12) et l'autre bras (50) est relié à la deuxième partie (29) de la ligne d'alimentation (12).

7. Equipement électrique selon la revendication 6, **caractérisé en ce que** le sectionneur de mise à la masse (20) comprend un bras d'actionnement (58) manuel muni d'une poignée (60) apte à faire pivoter les deux bras (50) entre la position ouverte et la position fermée.

8. Equipement électrique selon l'une quelconque des revendications 1 à 7, **caractérisé en ce que** le disjoncteur (14) est un disjoncteur à vide, comprenant une ampoule à vide.

9. Equipement électrique selon l'une quelconque des revendications 1 à 8, **caractérisé en ce que** le disjoncteur (14), le sectionneur de mise à la masse (20) et le dispositif de sectionnement (28) sont fixés sur une plaque de support (30) destinée à être disposée en toiture d'un véhicule ferroviaire à traction électrique.

10. Véhicule ferroviaire à traction électrique comprenant un équipement électrique (2) selon l'une quelconque des revendications 1 à 9.

## Patentansprüche

1. Elektrische Ausstattung (2), angeordnet auf dem Dach eines Schienenfahrzeugs mit elektrischem Wechselstrom-Antrieb, umfassend mindestens eine Versorgungsquelle mit Wechselstrom (6), wobei die Quelle (6) mit mindestens einer Versorgungsleitung mit Wechselstrom (12) verbunden ist, die zum anderen mit mindestens einer Hochspannungsausrüstung verbunden ist, die bestimmt ist, mit Wechselstrom versorgt zu sein, wobei ein Wechselstrom-Trennschalter (14) auf der Versorgungsleitung (12) derart vorgesehen ist, dass die Hochspannungsausrüstung von der Versorgungsquelle (6) isoliert wird, wenn der Leitungsschalter (14) geöffnet ist, wobei die elektrische Ausstattung (2) einen Massetrennschalter (20) umfasst, der zwischen einer geöffneten Position, in welcher der Masseschalter (20) nicht mit der Versorgungsleitung (12) verbunden ist, und einer geschlossenen Position, in welcher der Masseschalter (20) mit der Versorgungsleitung (12) an einem vorgelagerten Punkt (24) verbunden ist, der zwischen dem Ausgang (8) der Versorgungsquelle (6) und dem Eingang (16) des Leitungsschalters (14) angeordnet ist, und an einem nachgelagerten Punkt (26), der zwischen dem Ausgang (18) des Leitungsschalters (14) und der Hochspannungsausrüstung angeordnet ist, bewegbar ist, wobei die elektrische Ausstattung (2) ferner einer Trennvorrichtung (28) umfasst, die auf der Versorgungsleitung (12) angeordnet ist, wobei die Trennvorrichtung (28) zwischen einer geschlossenen Position, in welcher der Strom auf der Versorgungsleitung (12) zirkulieren kann, und einer geöffneten Position, in welcher die Verbindung zwischen der Versorgungsquelle (6) und dem Leitungsschalter (14) oder zwischen dem Leitungsschalter (14) und der Hochspannungsausrüstung unterbrochen ist, bewegbar ist, **dadurch gekennzeichnet, dass** die Trennvorrichtung (28) zwischen dem vorgelagerten Punkt (24) und dem Eingang (16) des Leitungsschalters (14) oder zwischen dem Ausgang (18) des Leitungsschalters (14) und dem nachgelagerten Punkt (26) vorgesehen ist.

2. Elektrische Ausstattung nach Anspruch 1, **dadurch gekennzeichnet, dass** die Versorgungsleitung mit Wechselstrom (12) von zwei Teilen (27, 29) gebildet ist, wobei der erste Teil (27) den Teil der Versorgungsleitung (12) umfasst, der sich vorgelagert zur Trennvorrichtung (28) erstreckt, und der zweite Teil (29) den Teil der Versorgungsleitung (12) umfasst, der sich nachgelagert zur Trennvorrichtung (28) erstreckt, wobei der erste (27) und der zweite (29) Teil physisch getrennt sind und durch die Positionierung der Trennvorrichtung (28) in geschlossener Position miteinander verbindbar sind.

3. Elektrische Ausstattung nach Anspruch 2, **dadurch gekennzeichnet, dass** die Trennvorrichtung (28) eine Hebel (48) umfasst, der aus einem leitenden Material besteht, wobei der Hebel (48) zwischen der geschlossenen Position, in welcher er den zweiten Teil (29) der Versorgungsleitung (12) mit dem ersten Teil (27) der Versorgungsleitung (12) verbindet, und der geöffneten Position, in welcher er von dem ersten (27) oder dem zweiten (29) Teil der Versorgungsleitung (12) beabstandet ist, rotierend bewegbar ist.

4. Elektrische Ausstattung nach Anspruch 3, **dadurch gekennzeichnet, dass** der Hebel (48) rotierend auf einem Aktuator angebracht ist, der am Eingang (42) des zweiten Teils (29) der Versorgungsleitung (12) vorgesehen ist.

5. Elektrische Ausstattung nach Anspruch 4, **dadurch gekennzeichnet, dass** der Aktuator des Hebels (48) die Rotationskraft an den Hebel (48) über einen Isolator (44) überträgt.

6. Elektrische Ausstattung nach einem der Ansprüche 2 bis 5, **dadurch gekennzeichnet, dass** der Masseschalter (20) zwei Arme (50) umfasst, die mit der Masse verbunden sind, wobei die Arme (50) zwischen der geöffneten Position, in welcher die Arme (50) von der Versorgungsleitung (12) beabstandet sind, und der geschlossenen Position, in welcher einer der Arme (50) mit dem ersten Teil (27) der Versorgungsleitung (12) verbunden ist und der andere Arm (50) mit dem zweiten Teil (29) der Versorgungsleitung (12) verbunden ist, bewegbar sind.

7. Elektrische Ausstattung nach Anspruch 6, **dadurch gekennzeichnet, dass** der Masseschalter (20) einen manuellen Betätigungsarm (58) umfasst, der mit einem Griff (60) ausgestattet ist, der imstande ist, die zwei Arme (50) zwischen der geöffneten Position und der geschlossenen Position zu schwenken.

8. Elektrische Ausstattung nach einem der Ansprüche 1 bis 7, **dadurch gekennzeichnet, dass** der Leitungsschalter (14) ein Vakuum-Leitungsschalter ist, umfassend einen Vakuumkolben.

9. Elektrische Ausstattung nach einem der Ansprüche 1 bis 8, **dadurch gekennzeichnet, dass** der Leitungsschalter (14), der Masseschalter (20) und die Trennvorrichtung (28) auf einer Trägerplatte (30) befestigt sind, die bestimmt ist, auf dem Dach eines Schienenfahrzeugs mit elektrischem Antrieb angeordnet zu sein.

10. Schienenfahrzeug mit elektrischem Antrieb, umfassend eine elektrische Ausstattung (2) nach einem der Ansprüche 1 bis 9.

## Claims

1. An electric equipment (2) arranged on the roof of an electric traction railway vehicle, comprising at least one alternating current supply source (6), said source (6) being connected to at least one alternating current feeder (12), also connected to at least one high-voltage equipment intended to be supplied with alternating current, an alternating circuit-breaker (14) being provided on the feeder (12) so as to isolate the high-voltage equipment from the supply source (6) when said circuit-breaker (14) is open, the electric equipment (2) comprising a grounding breaker (20) movable between an open position in which said breaker (20) is not connected to the feeder (12), and a closed position, in which the breaker (20) is connected to the feeder (12) at an upstream point (24) positioned between the outlet (8) of the supply source (6) and the inlet (16) of the circuit-breaker (14) and at a downstream point (26) positioned between the outlet (18) of the circuit-breaker (14) and the high-voltage equipment, the electric equipment (2) further comprising a breaker device (28), positioned on the feeder (12), said breaker device (28) being movable between a closed position, in which the current can flow on the feeder (12), and an open position, in which the connection between the supply source (6) and the circuit-breaker (14) or between the circuit-breaker (14) and the high-voltage equipment is interrupted, **characterized in that** the breaker device (28) is provided between the upstream point (24) and the inlet (16) of the circuit-breaker (14) or between the outlet (18) of the circuit-breaker (14) and the downstream point (26).

2. The electric equipment according to claim 1, **characterized in that** the alternating current feeder (12) is formed in two portions (27, 29), the first portion (27) comprising the portion of the feeder (12) extending upstream of the breaker device (28) and the second portion (29) comprising the portion of the feeder (12) extending downstream of the breaker device (28), the first (27) and second (29) portions being physically separated and able to be connected to each other by positioning the breaker device (28) in the closed position.

3. The electric equipment according to claim 2, **characterized in that** the breaker device (28) comprises a bar (48), made from a conducting material, said bar (48) being rotatably mobile between the closed position in which it connects the second portion (29) of the feeder (12) to the first portion (27) of the feeder (12), and the open position, in which it is moved away from the first (27) or second (29) portions of the feeder (12).

4. The electric equipment according to claim 3, **characterized in that** the bar (48) is rotatably mounted on an actuator provided at the inlet (42) of the second portion (29) of the feeder (12).

5. The electric equipment according to claim 4, **characterized in that** the actuator of the bar (48) transmits the rotational stress to the bar (48) through an insulator (44).

6. The electric equipment according to one of claims 2 to 5, **characterized in that** the grounding breaker (20) comprises two arms (50) connected to the ground, said arms (50) being movable between the open position, in which said arms (50) are spaced away from the feeder (12), and the closed position, in which one of the arms (50) is connected to the first portion (27) of the feeder (12) and the other arm (50) is connected to the second portion (29) of the feeder (12).

7. The electric equipment according to claim 6, **characterized in that** the grounding breaker (20) comprises a manual actuating arm (58) provided with a handle (60) capable of making the two arms (50) pivot between the open position and the closed position.

8. The electric equipment according to any one of claims 1 to 7, **characterized in that** the circuit-breaker (14) is a vacuum circuit-breaker, comprising a vacuum bulb.

9. The electric equipment according to any one of claims 1 to 8, **characterized in that** the circuit-breaker (14), the grounding breaker (20) and the breaker device (28) are fastened on a support plate (30) intended to be positioned on the roof of an electric traction railway vehicle.

10. An electric traction railway vehicle comprising electric equipment (2) according to any one of claims 1 to 9.
